# EUROPÄISCHE PATENTSCHRIFT

(11) **EP 4 021 178 B1**
(45) Veröffentlichungstag und Bekanntmachung des Hinweises auf die Patenterteilung: **12.08.2026**
(21) Anmeldenummer: 20754215.0
(22) Anmeldetag: 06.08.2020
(51) Int. Cl.: A01M 7/00

(54) **LANDWIRTSCHAFTLICHES GERÄT MIT VERBESSERTER AUFHÄNGUNG**
AGRICULTURAL MACHINE WITH IMPROVED SUSPENSION
MACHINE AGRICOLE AVEC SUSPENSION AMÉLIORÉE

(30) Priorität: 29.08.2019 DE 102019123175
(43) Veröffentlichungstag der Anmeldung: 06.07.2022
(73) Patentinhaber: Amazonen-Werke H. Dreyer SE & Co. KG, 49205 Hasbergen (DE)
(72) Erfinder: OBERHEIDE, Friedrich, 49143 Bissendorf (DE); BORCHERT, Anna-Gret, 49090 Osnabrück (DE); GROSSE PRUES, Frank, 49593 Bersenbrück (DE); AUSTERMANN, Stefan, 48291 Telgte (DE)
(86) Internationale Anmeldenummer: PCT/EP2020/072145
(87) Internationale Veröffentlichungsnummer: WO 2021/037519

(56) Entgegenhaltungen:
- EP-A1- 2 311 318
- EP-A1- 2 829 177
- EP-A1- 3 058 820

## Beschreibung

Die Erfindung betrifft ein landwirtschaftliches Gerät. Ferner betrifft die Erfindung ein Verfahren zur Steuerung und/oder Regelung eines landwirtschaftlichen Geräts.

Es sind vielfältige landwirtschaftliche Geräte zum Ausbringen von Material, wie Düngemittel, Pflanzenschutzmittel oder Saatgut bekannt, beispielsweise Feldspritzen. Um das Material großflächig und effizient auf dem zu bearbeitenden Feldboden auszubringen, weisen die landwirtschaftlichen Geräte ein Verteilergestänge mit mehreren Ausbringungselementen, etwa Sprühdüsen auf. Das Verteilergestänge erstreckt sich quer zur Fahrtrichtung und kann Arbeitsbreiten von bis zu 50 m aufweisen. Dabei soll im Betrieb der Abstand zwischen dem Verteilergestänge und dem Boden über die gesamte Arbeitsbreite des Verteilergestänges möglichst konstant bleiben. Das bedeutet, dass das Verteilergestänge, auch bei Unebenheiten im zu bearbeitenden Boden, möglichst parallel zum zu bearbeitenden Boden gehalten wird.

Problematisch ist es, wenn das landwirtschaftliche Nutzfahrzeug in unterschiedlich tiefen Spurrillen des Bodens, einseitig in einer Furche oder an einem Hang des zu bearbeitenden Feldes fährt. Bei derartigen Bodenunebenheiten können die Enden des Verteilergestänges in Kontakt mit dem Boden und/oder Pflanzenbestand kommen und beschädigt werden. Zusätzlich ist die homogene Verteilung des auszubringenden Materials, aufgrund der geneigten Stellung des Verteilergestänges zum Boden, und damit eines größeren oder kleineren Abstandes zwischen dem Boden und einzelnen Düsen, nicht mehr gegeben.

Um diese Neigung und unerwünschte Bewegungen um die Fahrzeuglängsachse auszugleichen, sind Vorrichtungen bekannt, die über eine Pendelaufhängung und über Neigungssensoren oder Abstandssensoren verfügen und welche über Stellvorrichtungen den konstanten Abstand zum Boden einzustellen versuchen.

Die Neigungsverstellung der Ausleger des Verteilergestänges erfolgt häufig durch Hydraulikzylinder und Feder-Dämpfersystemen, die mit dem jeweiligen Ausleger verbunden sind. Beispielhaft wird auf FR 2 795 913 A1, EP 1 167 095 A1 und EP 0 922 385 A1 verwiesen. Als Messgrößen gehen bei den bekannten Regelungen der Abstand zwischen dem Ausleger und dem Boden und/oder der Relativwinkel zwischen dem Ausleger und dem Schlepper ein. Die bekannten Regelungen haben den Nachteil, dass diese ungenau sind und eine Echtzeitregelung nicht erlauben.

Demgegenüber weist beispielsweise die Feldspritze gemäß EP 1 444 894 A1 eine mehrgliedrige Aufhängung auf, bei der sowohl die Signale aus der Abstandsmessung zwischen Ausleger und Boden als auch Neigungssignale, die die Relativneigung zwischen dem Fahrzeug und dem Ausleger wiedergeben, in die Regelung eingehen. Der Ausleger ist an einem höhenverstellbaren Hubrahmen um eine in Fahrtrichtung weisende Drehachse drehbar gelagert. Ein drehbarer Zwischenrahmen ist koaxial zum Ausleger am Hubrahmen angebracht. Der Zwischenrahmen und der Ausleger sind durch zwei Zentrierfedern und einen Dämpfer miteinander gekoppelt. Zwischen dem Zwischenrahmen und dem Hubrahmen ist ein Hydraulikzylinder vorgesehen.

Zur Neigungsverstellung wird der Hydraulikzylinder ein- oder ausgefahren und verdreht den Zwischenrahmen gegenüber dem Hubrahmen. Dadurch wird eine der beiden Zentrierfedern gelängt und die andere verkürzt. Die auf den Ausleger wirkende Federkraft zieht den Ausleger entsprechend der Bewegung des Zwischenrahmens nach, so dass dieser - bezogen auf den Zwischenrahmen - in der geneigten Endposition wieder zentriert ist. Die Zentrierfedern kompensieren überdies schnelle Relativbewegungen zwischen Fahrzeug und Ausleger, so dass der Ausleger im Betrieb lagestabil bleibt.

In die Neigungsregelung gehen einerseits die Signale aus der Bodenabstandsmessung zwischen dem Ausleger und dem Boden und andererseits ein Neigungssignal ein, das ein Maß für die auf den Ausleger wirkende Federkraft bildet. Damit kann der Hydraulikzylinder präzise angesteuert werden. Ein Übersteuern des Auslegers wird weitgehend vermieden.

Allerdings ist diese Neigungsregelung langsam. Außerdem ist der Aufbau mit dem Zwischenrahmen und den zwischen den Zwischenrahmen und den Ausleger geschalteten Federn aufwändig.

Die EP 3 058 820 A1 zeigt ein landwirtschaftliches Gerät zum Ausbringen von Material. Das darin beschriebene Ausbringgestänge umfasst ein Mittelteil mit beidseitig über horizontale Schwenkachsen drehbar gelagerten Zwischenrahmen in Form von Flanschblöcken an denen jeweils seitlich ein Ausleger moniert ist. Die Flanschblöcke können über ein Stellglied miteinander verbunden werden oder aber auch über zwei Stellglieder jeweils mit dem Mittelteil verbunden sein.

Die Aufgabe der vorliegenden Erfindung ist es daher, ein landwirtschaftliches Gerät mit verbesserter Neigungsregelung zur Verfügung zu stellen. Eine weitere Aufgabe der Erfindung ist es, ein Verfahren zur Steuerung eines landwirtschaftlichen Geräts zur Verfügung zu stellen.

Diese Aufgaben werden gelöst durch ein landwirtschaftliches Gerät gemäß Anspruch 1 und ein Verfahren nach Anspruch 14.

Bevorzugte Ausführungsformen sind in den abhängigen Ansprüchen beschrieben.

Das landwirtschaftliche Gerät kann insbesondere eine Feldspritze sein. Die Feldspritze kann selbstfahrend sein. Sie kann auch eine gezogene, getragene, angebaute oder aufgebaute Feldspritze sein.

Im Folgenden bezeichnen die Begriffe "horizontale Achse/Richtung" und "vertikale Achse/Richtung", sofern nicht anders explizit angegeben, jeweils eine Achse/Richtung die in Fahrtrichtung des landwirtschaftlichen Geräts zeigt bzw. eine Achse/Richtung, die senkrecht zur Fahrtrichtung des landwirtschaftlichen Geräts und senkrecht zum Boden steht.

Weiterhin ist im Folgenden unter dem An- und Abwinkeln eines Auslegers eine Drehbewegung des Auslegers um eine horizontale Drehachse, insbesondere die horizontale Drehachse des jeweilige Zwischenrahmens, zu verstehen. Mit anderen Worten bewirkt ein An- bzw. Abwinkeln eine Änderung des Winkels des jeweiligen Auslegers gegenüber der Horizontalen. Dabei bewegt sich der jeweilige Ausleger beim Anwinkeln vom Boden weg und beim Abwinkeln zum Boden hin. Ein Verkippen des Verteilergestänges bezeichnet dementsprechend ein Anwinkeln eines Auslegers bei entsprechenden Abwinkeln des anderen Auslegers. Die Bewegung eines oder beider Ausleger um die jeweilige horizontale Drehachse wird im Folgenden auch als Neigungsbewegung, die entsprechende Stellung auch als Neigung bezeichnet.

Erfindungsgemäß umfasst das Verteilergestänge des landwirtschaftlichen Geräts einen drehfest am landwirtschaftlichen Gerät befestigten Mittelteil und zwei am Mitteilteil über Gelenke verbundene Zwischenrahmen. Insbesondere ist die Verbindung der Zwischenrahmen mit dem Mittelteil derart gestaltet, dass die Zwischenrahmen jeweils um mindestens eine horizontale Drehachse beweglich sind. Weiterhin sind die Zwischenrahmen jeweils um eine vertikale Drehachse beweglich.

Die seitlichen Ausleger des Verteilergestänges sind jeweils mit einem der beiden Zwischenrahmen verbunden. Insbesondere ist die Verbindung der Ausleger mit den Zwischenrahmen derart gestaltet, dass eine Bewegung des Zwischenrahmens, insbesondere eine Drehbewegung um eine horizontale Achse, auf den jeweiligen Auslegers übertragen wird.

Erfindungsgemäß sind weiterhin zwei hydraulische Stellvorrichtungen vorgesehen, wobei die erste hydraulische Stellvorrichtung den Mittelteil mit einem ersten der beiden Zwischenrahmen verbindet, so dass der entsprechende erste Ausleger mittels der ersten hydraulischen Stellvorrichtung um eine erste horizontale Achse bewegt werden kann. Mittels der zweiten hydraulischen Stellvorrichtung kann der zweite Ausleger um eine zweite horizontale Achse bewegt werden.

Dadurch, dass die beiden Ausleger getrennt über die jeweiligen Zwischenrahmen drehbar am drehfesten Mittelteil befestigt sind, wobei die zwei hydraulischen Stellvorrichtungen zur Neigungseinstellung der Zwischenrahmen vorgesehen sind, kann eine verbesserte und vereinfachte Neigungskontrolle der jeweiligen Ausleger erreicht werden. Neigungsänderungen am Verteilergestänge können bei dem erfindungsgemäßen landwirtschaftlichen Gerät damit, anders als bei den oben beschriebenen bekannten landwirtschaftlichen Geräten, über die direkte Kontrolle der Ausleger erreicht werden.

Der Mittelteil kann in seinem unteren Bereich einen Querrahmen aufweisen. Der erste und der zweite Zwischenrahmen können nach oben gerichtet auf dem Querrahmen angeordnet sein.

Dabei können die erste und zweite horizontale Drehachse im unteren Bereich des ersten und zweiten Zwischenrahmens angeordnet sein. Mit anderen Worten können die jeweiligen horizontalen Drehachsen bei dieser Anordnung in vertikaler Richtung nahe an den Spritzdüsen des Gestänges liegen. Um eine Abdeckung der gesamten Arbeitsbreite des landwirtschaftlichen Geräts zu erreichen, sind Spritzdüsen sowohl an den jeweiligen Auslegern als auch am Mittelteil vorgesehen. Da durch das Anwinkeln eines Auslegers ein Spalt zwischen dem Ausleger und dem Mittelteil entsteht, vergrößert sich der Abstand zwischen den am jeweiligen Ausleger angeordneten Spritzdüsen und den am Mittelteil vorgesehenen Spritzdüsen. Damit ergibt sich ein Bereich des überfahrenen Bodens, der nicht oder nur unzureichend von den Spritzdüsen abgedeckt werden kann. Durch die Anordnung der horizontalen Drehachse im unteren Bereich des Verteilergestänges kann erreicht werden, dass dieser Spalt möglichst klein gehalten wird.

Die erste hydraulische Stellvorrichtung kann mit dem ersten Zwischenrahmen im oberen Bereich des ersten Zwischenrahmens und mit dem Mittelteil im unteren Bereich des Mitteilteils, insbesondere mit dem Querrahmen und beabstandet von dem ersten Zwischenrahmen, verbunden sein. Mit anderen Worten kann die erste hydraulische Stellvorrichtung in vertikaler Richtung schräg zwischen dem ersten Zwischenrahmen und dem Mittelteil angeordnet sein. Durch eine solche Anordnung kann erreicht werden, dass die beiden Angriffspunkte der ersten Stellvorrichtung jeweils einen möglichst großen Abstand zu der ersten Drehachse aufweisen. Damit kann eine vorteilhafte Kraftübertragung der ersten Stellvorrichtung auf den ersten Zwischenrahmen erreicht werden.

Die erste und die zweite Stellvorrichtung können als Hydraulikzylinder, insbesondere als doppeltwirkender Hydraulikzylinder ausgebildet sein. Derartige Zylinder bilden kostengünstige und einfache Mittel zur Steuerung der Lage des Verteilergestänges. Die doppeltwirkenden Hydraulikzylinder können beispielsweise jeweils mit einem Kolben ausgebildet sein, welcher beidseitig mit Druck beaufschlagbar ist.

Den hydraulischen Vorrichtungen können weiterhin ein oder mehrere Drucksensoren zugeordnet sein. Durch Bewegungen eines Auslegers und des zugehörigen Zwischenrahmens können entsprechende Kräfte auf die jeweilige hydraulische Stellvorrichtung übertragen werden, die sich wiederum in Druckänderungen in der hydraulischen Stellvorrichtung niederschlagen können. Diese Druckänderungen können mittels der erwähnten Drucksensoren erfasst werden. Weiterhin kann ein an der hydraulischen Stellvorrichtung herrschender Druck auch einer Neigungsstellung eines Auslegers entsprechen. In diesem Fall kann mit den Drucksensoren auch die Neigung eines jeweiligen Auslegers überwacht werden.

Die Drucksensoren können dabei als Drucksensor zur direkten Druckmessung, insbesondere als Druckmessumformer, ausgebildet sein. Eine solche Ausbildung hat den Vorteil, dass hierdurch sowohl ein Relativdruck, als auch ein Absolutdruck ermittelt werden können. Weiterhin können die Drucksensoren vorzugsweise als Differenzdruckmessumformer zur Ermittlung eines Differenzdrucks, beziehungsweise eines auftretenden Druckunterschieds, ausgebildet sein. Vorteilhafterweise können die Druckmessumformer den zu messenden Druck über eine Messmembran erfassen, welche in Abhängigkeit vom jeweiligen Druck mechanisch umgeformt wird. Diese mechanische Veränderung kann elektronisch gemessen, als analoges oder digitales Ausgangssignal ausgegeben und beispielsweise an die Regeleinheit übermittelt werden.

Den ersten und zweiten hydraulischen Stellvorrichtungen können jeweils entsprechende hydraulische Ventile, insbesondere proportionale Wegeventile, zugeordnet sein. Die hydraulischen Ventile können in Verbindung mit Drucksensoren als Druckregelventile zum Einhalten eines verbraucherseitigen Drucks in Abhängigkeit von einem elektrischen Steuersignal, insbesondere Steuerstrom, ausgebildet sein.

Das hydraulische Ventil kann beispielsweise ein direktgesteuertes und federbelastetes Dreiwegeventil beispielsweise in Schieberbauart sein. Im stromlosen Zustand bzw. ohne Steuersignal wird der Druck am Verbraucher zu einem hydraulischen Tank hin entlastet. Bei maximalem Steuersignal wird der maximal mögliche Druck (entweder der Druckversorgung oder der maximale Wert des hydraulischen Ventils) auf den Verbraucher eingeregelt.

Bei Anlegen eines Steuersignals wird der Federbelastung im Ventil elektromagnetisch entgegengewirkt und der Druck auf der Verbraucherseite dadurch entsprechend der Steuerkennlinie des Ventils konstant gehalten. Beispielsweise ist der eingestellte Druck dann proportional zum Steuersignal, das insbesondere ein Steuerstrom ist. Eine solche proportionale Steuerkennlinie ist jedoch nicht zwingend erforderlich und kann beispielsweise aus Kostengründen durch eine nichtproportionale Ansteuerung ersetzt werden. Hierfür können beliebige Steuerkennlinien in der Regeleinheit abgelegt sein, um Steuersignale passend zu einzelnen Solldruckwerten zu berechnen und auszugeben.

Die Ventile können insbesondere einen Ventilkörper mit einem Regelkolben, einer Rückstellfeder und einer Magnetspule mit Magnetanker zur elektrischen Betätigung umfassen. Wenn ein elektrisches Signal über die Regeleinheit angelegt wird, kann der Magnetanker mit einer dem Signal entsprechenden Kraft auf den Regelkolben drücken. Dadurch kann Öl durch das Ventil strömen und Druck auf- oder abgebaut werden, wodurch die Stellvorrichtung aktiviert werden kann. Dies geschieht solange, bis der anliegende Druck dem Solldruck gemäß elektrischem Signal entspricht.

Generell beruht die Funktionsweise von Proportionaldruckregelventilen auf einer Regelung eines auftretenden Druckunterschieds. Wird ein voreingestelltes Druckniveau unterschritten, führt das Ventil selbsttätig Öl aus dem Hydraulikreservoir zu, bis der Sollwert wieder erreicht ist. Andernfalls wird bei einem zu hohen Druckniveau Öl abgelassen. Der Einsatz von Proportionaldruckregelventilen bietet effiziente Steuer- und Stabilitätseigenschaften, sowie eine geringe Hysterese der Ventile, welche aufgrund von Reibung und Magnetisierung entstehen kann. Weiterhin ermöglichen Proportionalventile einen platzsparenden Einbau, sowie eine einfache Montage und Austauschbarkeit.

Die hydraulischen Ventile können anhand einer bekannten Kennlinie elektronisch gesteuert auf einen Sollwert einstellbar sein. Die Kennlinien beschreiben beispielsweise den Zusammenhang zwischen einem auftretenden Druck und dem zugehörigen benötigten elektrischen Strom an einer Steuerspule des Ventils. Beispielhaft kann über die oben beschriebenen Drucksensoren ein einzustellender Sollwert der hydraulischen Ventile ermittelt werden, wodurch anhand der Kennlinie ein Steuerstrom auf die Ventile geschaltet wird, um den entsprechenden Druck einzustellen. Dies hat den Vorteil, dass über die Kennlinie der hydraulischen Ventile der Druck auf das Verteilergestänge präzise an einen Sollwert angepasst werden kann.

Weiterhin kann der ersten Stellvorrichtung und der zweiten Stellvorrichtung jeweils ein dem jeweiligen hydraulischen Ventil zugeordnetes Sperrventil zugeordnet sein. Mit einem solchen Sperrventil kann insbesondere das Abfließen von hydraulischer Flüssigkeit aus der jeweiligen Stellvorrichtung verhindert werden. Damit können die jeweiligen Ausleger in einer gewünschten Lage verriegelt werden. Dies kann beispielsweise bei Situationen wie dem Straßentransport oder beim Ein- und Ausklappen des Verteilergestänges, in denen das Verteilergestänge über die Stellvorrichtung starr mit dem landwirtschaftlichen Gerät verbunden sein soll, wünschenswert sein.

Die hydraulischen Stellvorrichtungen können weiterhin über die hydraulischen Ventile mit einem Hydraulikkreislauf verbunden sein. Der Hydraulikkreislauf kann ein offener Kreislauf sein, der beispielsweise eine Pumpe und einen Hydrauliktank umfasst.

Die jeweiligen Ausleger können mehrteilig ausgebildet sein. Sie können klappbare Segmente umfassen, die um eine senkrecht zur Fahrrichtung verlaufende Achse bewegt werden können. Die Ausleger können weiterhin segmentweise ein- und ausgeklappt werden. Dabei können sie auch Zwischenstellungen einnehmen. Damit ist es möglich, die Arbeitsbreite des landwirtschaftlichen Geräts anzupassen, indem eine bestimmte Anzahl von Segmenten ausgeklappt wird. Dies kann insbesondere für einen Ausleger unabhängig von dem anderen Ausleger geschehen. An zwischen den klappbaren Segmenten liegenden Gelenken können jeweils Sensoren, insbesondere Potentiometer, zur Ermittlung der Klappzustände angebracht sein. Diese Sensoren können sowohl vollständig eingeklappte / ausgeklappte Segmente als auch Zwischenstellungen an den Gelenken zwischen benachbarten Segmenten feststellen sowie den jeweiligen Klappzustand an die Regeleinheit übermitteln. Zudem ist es mittels der beschriebenen Segmentierung möglich, die Ausleger kompakt, beispielsweise in eine Transportposition, einzuklappen.

Die zweite hydraulische Stellvorrichtung verbindet die Zwischenrahmen miteinander, insbesondere im oberen Bereich der Zwischenrahmen.

Bei dieser Ausführungsform kann die Neigungskontrolle der jeweiligen Ausleger über ein Zusammenwirken der beiden hydraulischen Stellvorrichtungen erreicht werden. Beispielsweise kann durch das Aus- bzw. Einfahren des Kolbens der ersten Stellvorrichtung ein Ab- bzw. Anwinkeln des ersten Auslegers erfolgen. Da bei dieser Ausführungsform die beiden Zwischenrahmen über die zweite Stellvorrichtung gekoppelt sind, kann sich die resultierende Bewegung des ersten Zwischenrahmens auf den zweiten Zwischenrahmen übertragen. Je nach gewünschter Lage des zweiten Auslegers, kann auch ein Ein- oder Ausfahren des Kolbens der zweiten Stellvorrichtung erfolgen.

Soll beispielsweise nur der erste Ausleger angewinkelt werden, so kann bei dieser Ausführungsform der Kolben der ersten Stellvorrichtung eingefahren werden. Um zu verhindern, dass die resultierende Bewegung des ersten Zwischenrahmens auf den zweiten Zwischenrahmen übertragen wird, kann der Kolben der zweiten Stellvorrichtung ebenfalls eingefahren werden. Dies kann beispielsweise durch eine aktive Ansteuerung der zweiten Stellvorrichtung geschehen.

Soll beispielsweise nur der zweite Ausleger angewinkelt werden, so kann bei dieser Ausführungsform der Kolben der zweiten Stellvorrichtung eingefahren werden. Die Kolbenposition der ersten Stellvorrichtung kann hingegen beibehalten werden. Dies kann beispielsweise durch aktive Ansteuerung der ersten Stellvorrichtung erfolgen, aber auch durch ein Verriegeln der ersten Stellvorrichtung, beispielsweise über ein Sperrventil. In diesem Fall wird also der erste Zwischenrahmen mittels der ersten Stellvorrichtung fixiert.

Soll beispielsweise das gesamte Verteilergestänge verkippt werden, so kann bei dieser Ausführungsform der Kolben der ersten Stellvorrichtung je nach gewünschter Kipp-Richtung ein- bzw. ausgefahren werden. Die Kolbenposition der zweiten Stellvorrichtung kann hingegen beibehalten werden. Dies kann beispielsweise durch aktive Ansteuerung der zweiten Stellvorrichtung erfolgen, aber auch durch ein Verriegeln der zweiten Stellvorrichtung, beispielsweise über ein Sperrventil. Dadurch kann die Bewegung des ersten Zwischenrahmens auf den zweiten Zwischenrahmen übertragen werden, und beide Ausleger können sich in die gleiche Richtung um ihre jeweiligen Drehachsen bewegen. Dies führt zu einem Anwinkeln eines der Ausleger und zu einem entsprechenden Abwinkeln des anderen Auslegers, und damit zu einem Verkippen des Gestänges.

Diese Ausführungsform erlaubt daher eine flexible und einfache Neigungskontrolle des gesamten Verteilergestänges. Es versteht sich, dass durch entsprechende Steuerung der jeweiligen Stellvorrichtungen beliebige Neigungsstellungen der Ausleger möglich sind.

Alternativ kann die zweite hydraulische Stellvorrichtung den zweiten der Zwischenrahmen mit dem Mittelteil verbinden. Bei dieser nicht beanspruchten Ausführungsform kann die Neigungskontrolle des ersten und zweiten Auslegers unabhängig voneinander erfolgen. Dabei kann die erste Stellvorrichtung für die Neigungskontrolle des ersten Auslegers, und die zweite Stellvorrichtung für die Neigungskontrolle des zweiten Auslegers verantwortlich sein. Beispielsweise kann durch das Aus- bzw. Einfahren des Kolbens der ersten Stellvorrichtung ein Ab- bzw. Anwinkeln des ersten Auslegers erfolgen. Durch das Aus- bzw. Einfahren des Kolbens der zweiten Stellvorrichtung kann analog ein Ab- bzw. Anwinkeln des zweiten Auslegers erfolgen. Insbesondere können die hydraulischen Stellvorrichtungen so angeordnet sein, dass eine Bewegung des ersten Zwischenrahmens den zweiten Zwischenrahmen nicht beeinflusst, und umgekehrt.

Um beispielsweise den ersten Ausleger an- bzw. abzuwinkeln, kann bei dieser Ausführungsform der Kolben der ersten Stellvorrichtung ein- bzw. ausgefahren werden. Die zweite Stellvorrichtung und der zweite Zwischenrahmen können hierbei unverändert bleiben. Damit verändert auch der zweite Ausleger seine Position nicht. Analog hierzu kann zum An- bzw. Abwinkeln des zweiten Auslegers der Kolben der zweiten Stellvorrichtung ein- bzw. ausgefahren werden. Die erste Stellvorrichtung und der erste Zwischenrahmen können hierbei unverändert bleiben. Damit verändert auch der erste Ausleger seine Position nicht.

Diese Ausführungsform erlaubt damit eine einfache individuelle Neigungskontrolle der beiden Ausleger. Ein Verkippen des gesamten Verteilergestänges kann bei dieser Ausführungsform über das individuelle Anwinkeln eines und das gleichzeitige individuelle Abwinkeln des anderen Auslegers erreicht werden. Es versteht sich, dass durch entsprechende individuelle Ansteuerung der jeweiligen Stellvorrichtungen beliebige Neigungsstellungen der Ausleger möglich sind.

Die zweite hydraulische Stellvorrichtung kann bei dieser Ausführungsform mit dem zweiten Zwischenrahmen im oberen Bereich des zweiten Zwischenrahmens und mit dem Mittelteil im unteren Bereich, insbesondere mit dem Querrahmen und beabstandet von dem zweiten Zwischenrahmen, verbunden sein. Mit anderen Worten kann die zweite hydraulische Stellvorrichtung in vertikaler Richtung schräg zwischen dem zweiten Zwischenrahmen und dem Mittelteil angeordnet sein. Durch eine solche Anordnung kann erreicht werden, dass die beiden Angriffspunkte der zweiten Stellvorrichtung jeweils einen möglichst großen Abstand zu der zweiten Drehachse aufweisen. Damit kann eine vorteilhafte Kraftübertragung der zweiten Stellvorrichtung auf den zweiten Zwischenrahmen erreicht werden.

Die Zwischenrahmen können mit dem Mittelteil jeweils mittels eines Kugelgelenks verbunden sein. Eine solche Verbindung erlaubt auf einfache Art eine Bewegung der Zwischenrahmen sowohl um eine horizontale als auch eine vertikale Achse.

Das landwirtschaftliche Gerät kann weiterhin eine dritte hydraulische Stellvorrichtung umfassen, wobei die dritte hydraulische Stellvorrichtung einen ersten der Ausleger mit dem entsprechenden ersten Zwischenrahmen verbindet, wobei mittels der dritten hydraulischen Stellvorrichtung der erste Ausleger um eine erste vertikale Drehachse bewegt werden kann. Zudem kann das landwirtschaftliche Gerät eine vierte hydraulische Stellvorrichtung umfassen, wobei die vierte hydraulische Stellvorrichtung den zweiten der Ausleger mit dem entsprechenden zweiten Zwischenrahmen verbindet, wobei mittels der vierten hydraulischen Stellvorrichtung der zweite Ausleger um eine zweite vertikale Drehachse bewegt werden kann.

Die dritte und vierte hydraulische Stellvorrichtung können insbesondere dazu geeignet sein, die Ausleger des Verteilergestänges von einer Transport- in eine Arbeitsstellung zu überführen, und umgekehrt. Bei Feldspritzen wie den eingangs beschriebenen verbinden solche Stellvorrichtungen, auch als Klappzylinder bezeichnet, die jeweiligen Ausleger üblicherweise direkt mit einem Mittelteil des Gestänges. Dies hat den Nachteil, dass bei einer Neigungssteuerung eines Auslegers gegenüber dem Mittelteil immer auch die Klappzylinder angesteuert werden müssen. Dies kann durch die beschriebene Verbindung der Klappzylinder mit dem Zwischenrahmen und dem Ausleger vorteilhafterweise vermieden werden.

Das landwirtschaftliche Gerät kann weiterhin eine Dämpfungsanordnung zur Dämpfung von Bewegungen des ersten Auslegers und des zweiten Auslegers, insbesondere in Fahrtrichtung des landwirtschaftlichen Geräts, umfassen. Durch die Dämpfung solcher Bewegungen, die beispielsweise aufgrund der Trägheit der Ausleger bei Kurvenfahrten des landwirtschaftlichen Geräts auftreten können, werden die Kräfte, die auf den Mittelteil übertragen werden, verringert. Auf der anderen Seite unterdrückt die Dämpfungseinrichtung auch die Übertragung von Bewegungen des landwirtschaftlichen Geräts auf die jeweiligen Ausleger. Mit anderen Worten trägt die Dämpfungseinrichtung dazu bei, die Bewegungen der jeweiligen Ausleger auf der einen Seite und des landwirtschaftlichen Geräts auf der anderen Seite zu entkoppeln.

Die Dämpfungsanordnung kann die Zwischenrahmen unabhängig von dem Mittelteil miteinander verbinden. Damit ist insbesondere gemeint, dass die Dämpfungsanordnung dazu ausgebildet ist, eine Drehbewegung eines Auslegers um eine vertikale Achse gedämpft auf den anderen Ausleger zu übertragen. So kann vermieden werden, dass Drehmomente, die beispielsweise von Schwingungen des Verteilergestänges in bzw. entgegen der Fahrtrichtung herrühren, auf den Mittelteil und damit auf das landwirtschaftliche Gerät übertragen werden. Gleichzeitig kann damit eine Dämpfung solcher Schwingungen des Verteilergestänges erreicht werden.

Alternativ kann die Dämpfungsanordnung die jeweiligen Zwischenrahmen mit dem Mitteilteil verbinden. Dies kann beispielsweise durch zwei individuelle Dämpfungselemente realisiert werden, die jeweils einen Zwischenrahmen mit dem Mitteilteil verbinden. Eine solche Ausführungsform kann insbesondere bei einer aktiven Dämpfungsregelung vorteilhaft sein, da hier gezielt Einfluss auf die jeweiligen Ausleger genommen werden kann. Bei geeigneter aktiver Dämpfungsregelung kann bei dieser Ausführungsform eine Kraftübertragung von dem jeweiligen Ausleger auf den Mittelteil weitestgehend unterdrückt werden.

Die Dämpfungsanordnung kann mindestens ein mechanisches und/oder hydraulisches Dämpfungselement, insbesondere einen Hydraulikzylinder, umfassen. Dem mindestens einem hydraulischen Dämpfungselement kann weiterhin ein hydraulisches Ventil, insbesondere ein proportionales Wegeventil, zugeordnet sein. Somit kann die "Federkonstante" des hydraulischen Dämpfungselements durch den am Dämpfungselement eingestellten Druck reguliert werden. Weiterhin kann so eine aktive Dämpfungsregelung erreicht werden. Die hydraulischen Ventile können wie weiter oben beschrieben ausgebildet sein.

Alternativ oder zusätzlich kann das Dämpfungselement ein oder mehrere mechanische Federelemente umfassen. Beispielsweise kann das Dämpfungselement Gummipuffer umfassen. Es ist auch möglich, dass die hydraulischen Dämpfungselemente ein zusätzliches mechanisches Federelement umfassen. Dadurch kann eine zusätzliche passive Dämpfung erreicht werden.

Das landwirtschaftliche Gerät kann Sensoren umfassen, die es erlauben, Schwingungen der jeweiligen Ausleger um eine vertikale Achse zu erfassen. In diesem Fall ist es möglich, auf die detektierten Schwingungen mit einer Ansteuerung des dem Dämpfungselement zugeordneten Druckregelventils zu reagieren, und so die Schwingungen aktiv zu dämpfen. Insbesondere können die Drucksensoren dazu konfiguriert sein, einen Druck und/oder eine Druckänderung in dem mindestens einem hydraulischen Dämpfungselement und/oder in der dritten und vierten hydraulischen Stellvorrichtung zu erfassen. Die Kraft, die durch eine Bewegung eines Auslegers um die jeweilige vertikale Drehachse auf das mindestens eine hydraulische Dämpfungselement und/oder auf die dritte oder vierte hydraulische Stelleinrichtung ausgeübt wird, äußert sich in einer Druckänderung im Inneren des hydraulischen Dämpfungselements beziehungsweise der jeweiligen hydraulischen Stelleinrichtung. Damit können über die Druckmessung an dem hydraulischen Dämpfungselement Schwingungen eines Auslegers in und entgegen der Fahrtrichtung des landwirtschaftlichen Geräts erfasst werden. Auftretende Schwingungen in und entgegen der Fahrtrichtung können also mit solchen Sensoren mittels der Erfassung von Druckänderungen bestimmt werden.

Alternativ oder zusätzlich kann die Sensoreinrichtung Beschleunigungs- und/oder Bewegungssensoren umfassen, wobei die Beschleunigungs- und/oder Bewegungssensoren an den jeweiligen Auslegern angeordnet sind. Mittels solcher Sensoren können Bewegungen der Ausleger direkt erfasst werden.

Das landwirtschaftliche Gerät kann weiterhin Sensoren umfassen, die es erlauben, Schwingungen der jeweiligen Ausleger um eine horizontale Achse, zu erfassen. In diesem Fall ist es möglich, auf die detektierten Schwingungen mit einer Ansteuerung der ersten und/oder zweiten hydraulischen Stellvorrichtung zu reagieren und so die Schwingungen aktiv zu dämpfen. Die Sensoren können beispielsweise Beschleunigungssensoren sein. Die Sensoren können auch Drucksensoren sein, die den Druck in der ersten und zweiten hydraulischen Stellvorrichtung zu erfassen. Auftretende vertikale Schwingungen können mit solchen Sensoren mittels der Erfassung von Druckänderungen bestimmt werden.

Die Erfindung stellt weiterhin ein Verfahren nach Anspruch 14 zur Steuerung eines landwirtschaftlichen Geräts zur Verfügung. Das landwirtschaftliche Gerät kann dabei eines oder mehrere der oben beschriebenen Merkmale aufweisen. Das Verfahren umfasst die folgenden Schritte:
- Ansteuern der ersten hydraulischen Stellvorrichtung, um den entsprechenden ersten Ausleger um die erste in Fahrtrichtung des landwirtschaftlichen Geräts weisende Drehachse zu bewegen.
- Ansteuern der zweiten hydraulischen Stellvorrichtung, um den entsprechenden zweiten Ausleger um die zweite in Fahrtrichtung des landwirtschaftlichen Geräts weisende Drehachse zu bewegen.

Weitere Merkmale und Vorteile der Erfindung werden nachfolgend anhand der beispielhaften Figuren erläutert. Dabei zeigt:
- Figuren 1a bis 1c: schematisch die Heckansicht eines landwirtschaftlichen Geräts;
- Figur 2: schematisch einen Detailausschnitt eines landwirtschaftlichen Geräts in perspektivischer Ansicht;
- Figur 3: schematisch die Heckansicht eines Detailausschnitts eines landwirtschaftlichen Geräts;
- Figuren 4a bis 4c: schematisch die Heckansicht eines Detailausschnitts eines landwirtschaftlichen Geräts;
- Figur 5: schematisch die Heckansicht eines Detailausschnitts eines landwirtschaftlichen Geräts in einer nicht beanspruchten Ausführungsform; und
- Figuren 6a und 6b: schematisch die Draufsicht eines Detailausschnittes eines landwirtschaftlichen Geräts; und
- Figuren 7a und 7b: schematisch die Frontalansicht eines Detailausschnittes eines landwirtschaftlichen Geräts.

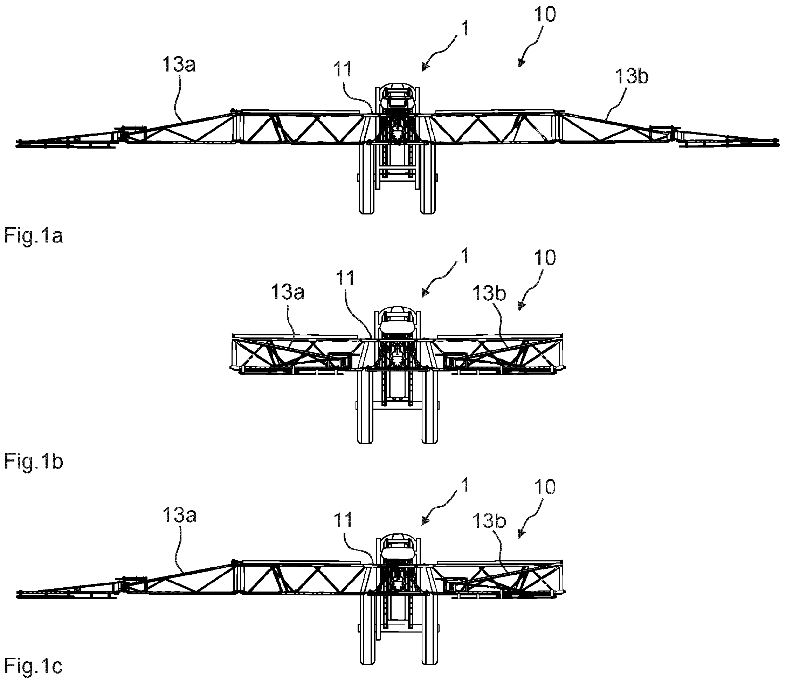

Figuren 1a bis 1c zeigen ein landwirtschaftliches Gerät 1, das als Feldspritze ausgebildet ist, in Heckansicht. Es ist zu erkennen, dass das Gerät 1 ein Verteilergestänge 10 mit einem Mittelteil 11 umfasst. Weiterhin besitzt das Verteilergestänge 10 zwei Ausleger 13 a und 13 b, die mit dem Mittelteil 11 durch Gelenke verbunden sind. Es ist weiterhin zu sehen, dass die Ausleger 13 a und 13 b jeweils mehrere Gestängeabschnitte aufweisen, die über klappbare Gelenke miteinander verbunden sind. Die einzelnen Gestängeabschnitte können dabei um eine vertikale Achse verklappt werden, so dass die Arbeitsbreite des landwirtschaftlichen Geräts angepasst werden kann. Die Gestängeabsschnitte können dabei für den jeweiligen Ausleger 13 a und 13 b unabhängig verklappt werden.

Figur 1a zeigt einen Zustand, in dem die Ausleger 13 a und 13 b vollständig ausgeklappt sind. Figur 1b zeigt einen Zustand, in dem jeweils nur innerste Gestängeabschnitt der Ausleger 13 a und 13 b ausgeklappt ist, während die restlichen Gestängeabschnitte eingeklappt sind. Figur 1c zeigt einen Zustand, in dem alle Gestängeabschnitte des Auslegers 13 a ausgeklappt sind, während nur der innerste Gestängeabschnitt des Auslegers 13 b ausgeklappt ist.

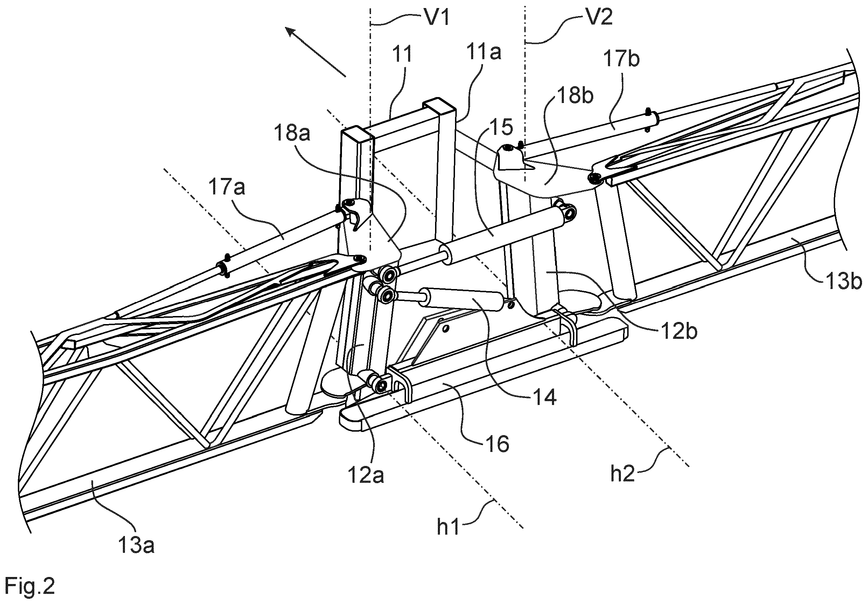

Figur 2 zeigt schematisch einen Detailausschnitt einer ersten Ausführungsform des landwirtschaftlichen Geräts 1. Dabei zeigt der Pfeil die Fahrtrichtung des landwirtschaftlichen Geräts 1 an. Es ist zu sehen, dass der Mittelteil 11 in seinem vorderen, also in Fahrtrichtung gelegenen, Bereich einen aufrecht stehenden, rechteckigen Rahmenteil 11 a aufweist. Der Rahmenteil 11 a kann beispielsweise verwendet werden, um den Mittelteil 11 drehfest mit dem landwirtschaftlichen Gerät 1 zu verbinden. Der Rahmenteil 11 a kann insbesondere auch höhenverstellbar mit dem landwirtschaftlichen Gerät 1 verbunden sein.

Weiterhin weist der Mittelteil 11 in seinem hinteren, unteren Bereich einen Querrahmen 16 auf. Auf dem Querrahmen 16 sind nach oben gerichtet zwei Zwischenrahmen 12 a und 12 b angeordnet. Dabei sind die Zwischenrahmen 12 a und 12 b mit dem Mittelteil 11 gelenkig verbunden, so dass sie jeweils um horizontale Drehachsen h1 und h2 und vertikale Drehachsen v1 und v2 beweglich sind. Die Verbindung der Zwischenrahmen 12 a und 12 b zum Querrahmen 16 kann beispielsweise über hier nicht gezeigte Kugelgelenke erfolgen, welche die beschriebenen Drehbewegungen ermöglichen. Die Zwischenrahmen 12 a und 12 b sind also so am Mittelteil 11 angeordnet, dass ihre jeweiligen horizontalen Drehachsen h1 und h2 im unteren Bereich des Verteilergestänges 10 verlaufen.

Figur 2 zeigt weiterhin, dass der Zwischenrahmen 12 a mittels einer ersten hydraulischen Stellvorrichtung 14 mit dem Mittelteil 11 verbunden ist. Dabei ist das eine Ende der hydraulischen Stellvorrichtung 14 mit dem Zwischenrahmen 12 a in seinem oberen Bereich verbunden. Das andere Ende der Stellvorrichtung 14 ist mit dem Mittelrahmen in seinem unteren Bereich verbunden, und zwar auf der dem Zwischenrahmen 12 b näherliegenden Seite. Mit anderen Worten ist die hydraulische Stellvorrichtung 14 schräg zwischen dem Zwischenrahmen 12 a und dem Mittelteil 11 angeordnet. Dabei liegen die jeweiligen Verbindungspunkte mit dem Zwischenrahmen 12 a und dem Mittelteil 11 beabstandet von der horizontalen Drehachse h1 des Zwischenrahmens 12 a. Dies ermöglicht eine vorteilhafte Kraftübertragung von der hydraulischen Stellvorrichtung auf den Zwischenrahmen 12 a, um eine Drehbewegung des Zwischenrahmens 12 a um seine horizontale Drehachse h1 zu erreichen.

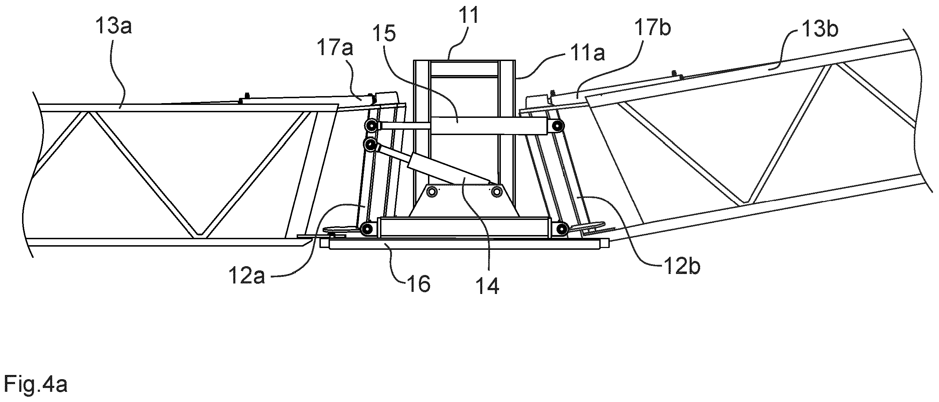

Es ist zudem zu sehen, dass der Zwischenrahmen 12 a und der Zwischenrahmen 12 b mittels einer zweiten hydraulischen Stellvorrichtung 15 miteinander verbunden sind. Die zweite hydraulische Stellvorrichtung 15 ist horizontal verlaufend im oberen Bereich der Zwischenrahmen 12 a und 12 b angerordnet. Durch eine entsprechende Ansteuerung der Stellvorrichtungen 14 und 15 kann eine Drehbewegung des Zwischenrahmens 12 b um seine horizontale Drehachse h2 erreicht werden. Dies wird weiter unten mit Bezug auf die Figuren 4a bis 4c detaillierter beschrieben.

Die Stellvorrichtungen 14 und 15 sind in der gezeigten Ausführungsform als Hydraulikzylinder 14 und 15 ausgebildet.

Figur 2 zeigt weiterhin, dass die Zwischenrahmen 12 a und 12 b an ihren oberen und unteren Enden jeweils mit den Auslegern 13 a und 13 b gelenkig verbunden sind. Dabei können sich die Ausleger 13 a und 13 b bezüglich der Zwischenrahmen 12 a und 12 b jeweils um eine vertikale Drehachse bewegen. Bezüglich horizontaler Drehungen sind die Ausleger 13 a und 13 b drehfest an den Zwischenrahmen 12 a und 12 b befestigt. Damit wird eine Drehbewegung der Zwischenrahmen 12 a und 12 b um ihre horizontalen Drehachsen h1 und h2 jeweils auf die Ausleger 13 a und 13 b übertragen. Mit anderen Worten können die Ausleger 13 a und 13 b mittels der hydraulischen Stellvorrichtungen 14 und 15 um die horizontalen Drehachsen h1 und h2 der Zwischenrahmen 12 a und 12 b bewegt werden. Damit kann die Neigung der Ausleger 13 a und 13 b mittels der Stellvorrichtungen 14 und 15 kontrolliert werden. Dies kann einerseits verwendet werden, um die Neigung der Ausleger 13 a und 13 b dem Boden anzupassen. Andererseits kann mittels einer geeigneten Kontrolle der Stellvorrichtungen 14 und 15 auch eine Dämpfung von Schwingungsbewegungen der Ausleger 13 a und 13 b in vertikaler Richtung erreicht werden. Es ist weiterhin möglich, die Bewegungen der Ausleger 13 a und 13 b über geeignete Ansteuerung der hydraulischen Stellvorrichtungen 14 und 15 von den Bewegungen des landwirtschaftlichen Geräts 1 weitestgehend zu entkoppeln.

Weiterhin ist in Figur 2 zu sehen, dass zwei hydraulische Stellvorrichtungen 17 a und 17 b jeweils die Ausleger 13 a,b mit den Zwischenrahmen 12 a,b verbinden. Durch die gelenkige Anordnung der Ausleger 13 a,b an den jeweiligen Zwischenrahmen 12 a,b ist es mittels der Stellvorrichtungen 17 a,b möglich, die Ausleger 13 a und 13 b um jeweilige vertikale Drehachsen zu bewegen. Insbesondere können die Stellvorrichtungen 17 a,b dazu verwendet werden, das Verteilergestänge 10 von einer Arbeits- in eine Transportposition zu überführen, oder umgekehrt. Es ist auch möglich, dass die Stellvorrichtungen 17 a,b kontrolliert werden, um Schwingungen der Ausleger 13 a,b in bzw. entgegen der Fahrtrichtung des landwirtschaftlichen Geräts 1 zu dämpfen.

Es ist weiterhin zu erkennen, dass die Zwischenrahmen 12 a,b an ihren jeweiligen oberen Enden jeweils eine gekrümmte Anlenkplatte 18 a,b aufweisen. Dabei ist jeweils ein äußeres Ende der Anlenkplatten 18 a,b mit der Stellvorrichtung 17 a,b verbunden, während das andere äußere Ende der Anlenkplatten 18 a,b mit dem Ausleger 13 a,b verbunden ist. Durch eine solche Ausgestaltung der Zwischenrahmen 12 a,b kann eine vorteilhafte Kraftübertragung zwischen den Zwischenrahmen 12 a,b und den Auslegern 13 a,b erreicht werden.

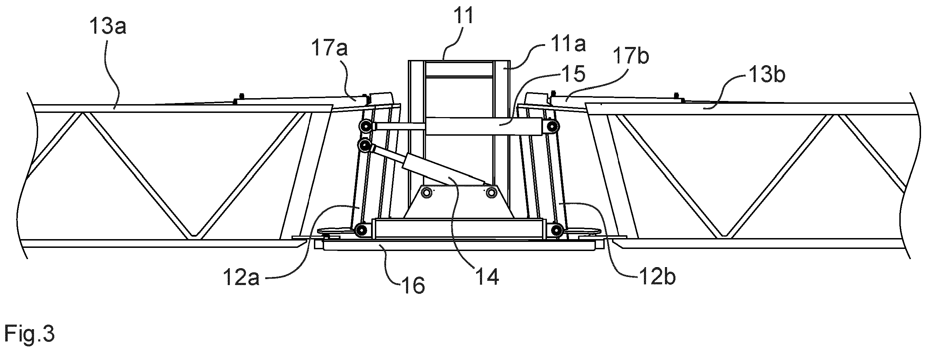

Figur 3 zeigt schematisch einen Detailausschnitt der in Figur 2 gezeigten ersten Ausführungsform des landwirtschaftlichen Geräts 1 in Heckansicht. Dabei zeigt Figur 3 einen Zustand des Verteilergestänges 10, bei dem beide Ausleger 13 a,b einen Winkel von 90° zur Vertikalen aufweisen. Dieser Zustand kann beispielsweise bei ebenem Boden einer normalen Arbeitsstellung des Verteilergestänges 10 entsprechen, bei der beide Ausleger 13 a,b parallel zum Boden geführt werden.

Demgegenüber sind in den Figuren 4a bis 4c in Heckansicht verschiedene Neigungszustände des Verteilergestänges 10 entsprechend der in Figur 2 gezeigten Ausführungsform gezeigt.

Figur 4a zeigt einen Neigungszustand des Verteilergestänges 10, bei dem der Ausleger 13 b angewinkelt ist, während der Ausleger 13 a einen Winkel von 90° zur Vertikalen aufweist. Es ist zu erkennen, dass die Stellvorrichtung 15, die die Zwischenrahmen 12 a und 12 b verbindet, gegenüber dem in Figur 3 gezeigten Zustand verkürzt ist, also der Kolben des Hydraulikzylinders 15 eingefahren worden ist. Demgegenüber ist die Länge der Stellvorrichtung 14 gegenüber dem in Figur 3 gezeigten Zustand unverändert. Beispielsweise kann der Kolben des Hydraulikzylinders 14 durch Schließen eines Sperrventils in seiner Position verriegelt worden sein. Es ist auch möglich, dass ein an dem Hydraulikzylinder 14 wirkender Druck dynamisch angepasst worden ist, um eine Bewegung des Zwischenrahmens 12 a zu verhindern. Jedenfalls ist der Ausleger 12 a gegenüber dem Mittelteil 11 fixiert, bewegt sich also nicht um seine horizontale Drehachse. Damit wirkt der Zwischenrahmen 12 a als starres Element, und durch die Verkürzung der Stellvorrichtung 15 wirkt eine Kraft auf den Zwischenrahmen 12 b, die ein Drehmoment um dessen horizontale Drehachse bewirkt. Dies führt wiederum zu einem Anwinkeln des Auslegers 13 b. Auf analoge Weise ergibt sich durch ein, nicht gezeigtes, Ausfahren des Kolbens des Hydraulikzylinders 15 bei Beibehalten der Kolbenposition des Hydraulikzylinders 14, ein Abwinkeln des Auslegers 13 b.

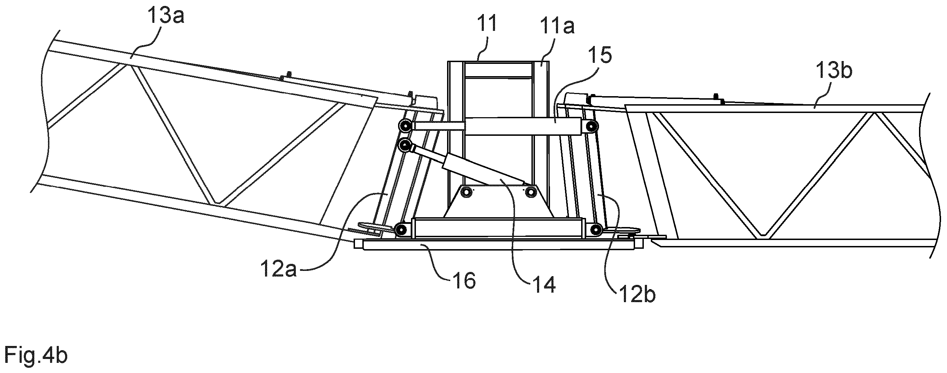

Figur 4b zeigt einen Neigungszustand des Verteilergestänges 10, bei dem der Ausleger 13 a angewinkelt ist, während der Ausleger 13 b einen Winkel von 90° zur Vertikalen aufweist. Es ist zu erkennen, dass die Stellvorrichtung 14, die den Zwischenrahmen 12 a mit dem Mittelteil 11 verbindet, gegenüber dem in Figur 3 gezeigten Zustand verkürzt ist, also der Kolben des Hydraulikzylinders 14 eingefahren wurde. Dadurch wirkt eine Kraft auf Zwischenrahmen 12 a, die in einem Drehmoment um dessen horizontale Drehachse resultiert. Dies führt wiederum zu einem Anwinkeln des Auslegers 13 a. Weiterhin ist zu erkennen, dass die Stellvorrichtung 15 ebenfalls gegenüber dem in Figur 3 gezeigten Zustand verkürzt worden ist, also der Kolben des Hydraulikzylinders 15 eingefahren wurde. Durch das Einfahren des Kolbens des Hydraulikzylinders 15 wird die Bewegung des Zwischenrahmens 12 a nicht auf den Zwischenrahmen 12 b übertragen. Auf analoge Weise ergibt sich durch ein, nicht gezeigtes, Ausfahren des Kolbens beider Hydraulikzylinder 14 und 15, ein Abwinkeln des Auslegers 13 a.

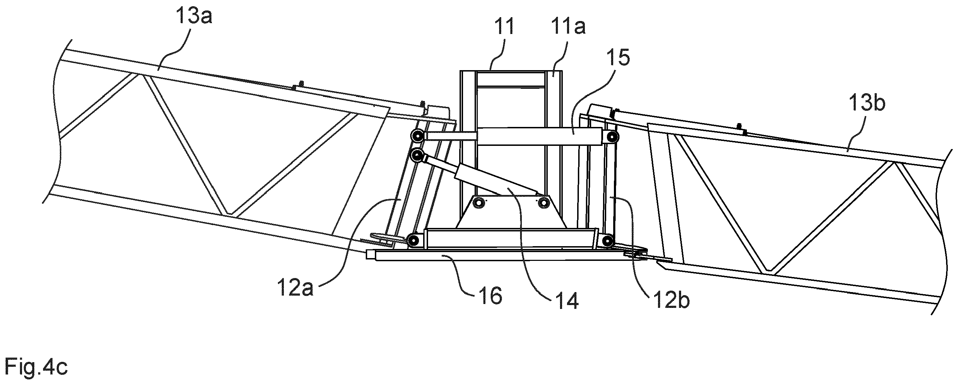

Figur 4c zeigt einen Neigungszustand des Verteilergestänges 10, bei dem der Ausleger 13 a angewinkelt und der Ausleger 13 b abgewinkelt ist. Mit anderen Worten ist das Verteilergestänge 10 in Fahrtrichtung gesehen im Uhrzeigersinn verkippt. Es ist zu sehen, dass die Stellvorrichtung 14 gegenüber dem in Figur 3 gezeigten Zustand verkürzt ist, also der Kolben des Hydraulikzylinders 14 eingefahren wurde. Wie oben mit Bezug auf Figur 4b beschrieben, führt dies zu einem Anwinkeln des Auslegers 13 a. Weiterhin ist zu erkennen, dass die Länge der Stellvorrichtung 15 gegenüber dem in Figur 3 gezeigten Zustand unverändert ist. Beispielsweise kann der Kolben des Hydraulikzylinders 15 durch Schließen eines Sperrventils in seiner Position verriegelt worden sein. Es ist auch möglich, dass ein an dem Hydraulikzylinder 15 wirkender Druck dynamisch angepasst worden ist, um die Lage des Kolbens konstant zu halten. Jedenfalls wirkt somit die Stellvorrichtung 15 als starres Element. Damit resultiert aus der Drehbewegung des Zwischenrahmens 12 a um seine horizontale Drehachse eine Kraft auf den Zwischenrahmen 12 b, die zu einer entsprechenden Drehbewegung des Zwischenrahmens 12 b um seine horizontale Drehachse führt. Damit erfolgt ein Abwinkeln des Auslegers 13 b.

Angesichts des eben Gesagten versteht es sich, dass es möglich ist, beliebige Neigungszustände der Ausleger 13 a und 13 b herzustellen, indem die hydraulischen Stellvorrichtungen 14 und 15, insbesondere die Kolbenposition der Hydraulikzylinder 14 und 15, entsprechend eingestellt werden. So ist es beispielsweise möglich, dass der Kolben des Hydraulikzylinders 14 eingefahren wird, um den Ausleger 13 a anzuwinkeln. Wenn gleichzeitig der Kolben des Hydraulikzylinders 15 stärker als in Figur 4b gezeigt eingefahren wird, so erfolgt auch ein Anwinkeln des Auslegers 13 b.

In den Figuren 4a bis 4c ist weiterhin zu erkennen, dass die Länge der Stellvorrichtungen 17 a,b, unabhängig vom Neigungszustand der Ausleger 13 a,b, nicht verändert werden muss, da die Neigung der Ausleger 13 a und 13 b direkt über die Neigung der Zwischenrahmen 12 a und 12 b kontrolliert wird, wobei die Stellvorrichtungen 17 a und 17 b die Zwischenrahmen 12 a und 12 b mit den Auslegern 13 a und 13 b verbinden. Damit entfällt die Notwendigkeit, die Stellvorrichtungen 17 a und 17 b bei der Neigungskontrolle der Ausleger 13 a und 13 b mitführen zu müssen.

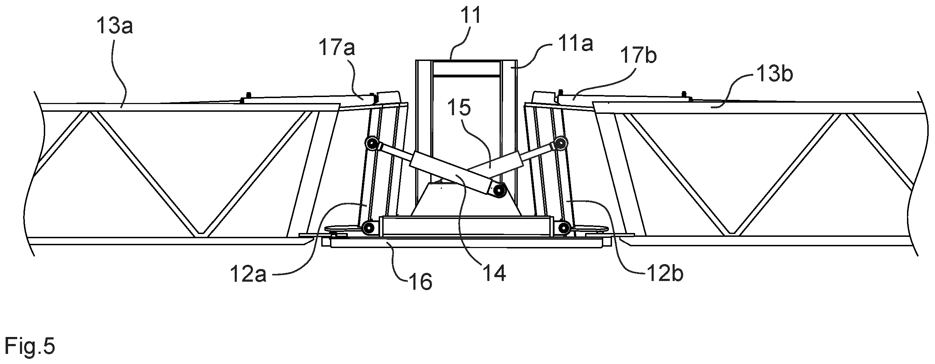

Figur 5 zeigt schematisch einen Detailausschnitt einer zweiten nicht beanspruchten Ausführungsform des landwirtschaftlichen Geräts 1 in Heckansicht. Die gezeigte zweite Ausführungsform unterscheidet sich dabei von der in den Figuren 2 bis 4 gezeigten Ausführungsform dadurch, dass die zweite Stellvorrichtung 15 den Mittelteil 11 mit dem zweiten Zwischenrahmen 12 b verbindet. In der gezeigten Ausführungsform ist die Anordnung der zweiten Stellvorrichtung 15 symmetrisch zu der Anordnung der ersten Stellvorrichtung 14. Damit sind die Zwischenrahmen 12 a und 12 b bezüglich Drehbewegungen um ihre horizontalen Drehachsen entkoppelt. Ein An- bzw. Abwinkeln der Ausleger 13 a und 13 b erfolgt damit direkt über das Ein- bzw. Ausfahren der Kolben der Hydraulikzylinder 14 bzw. 15.

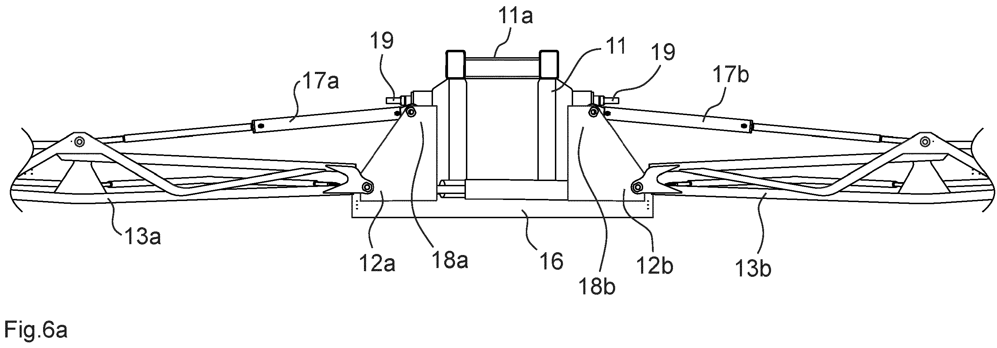

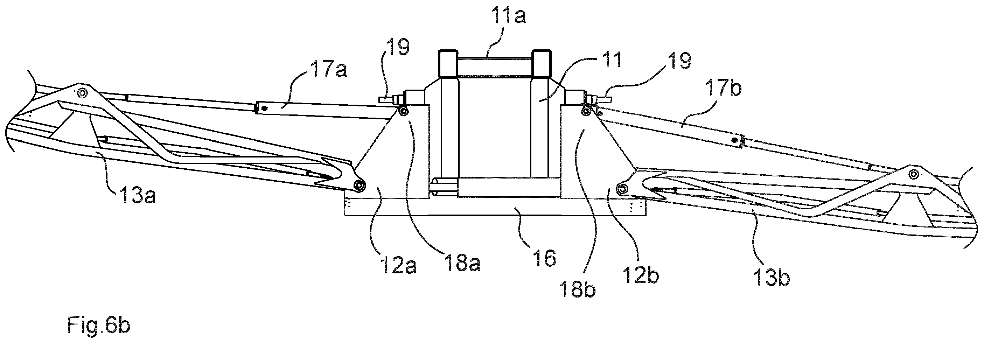

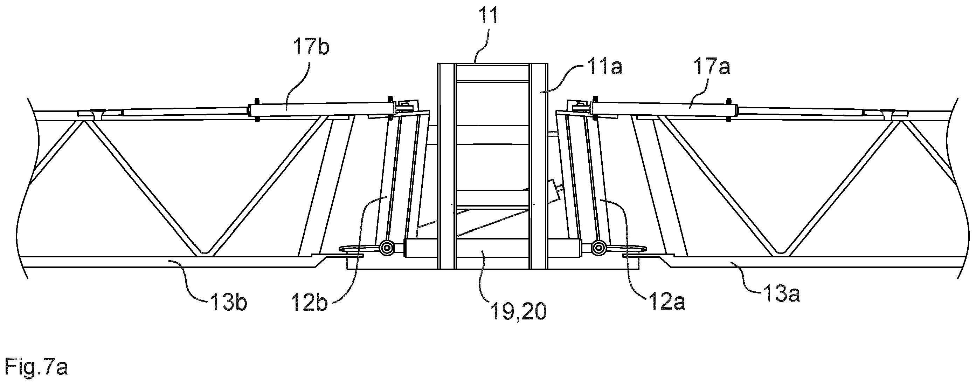

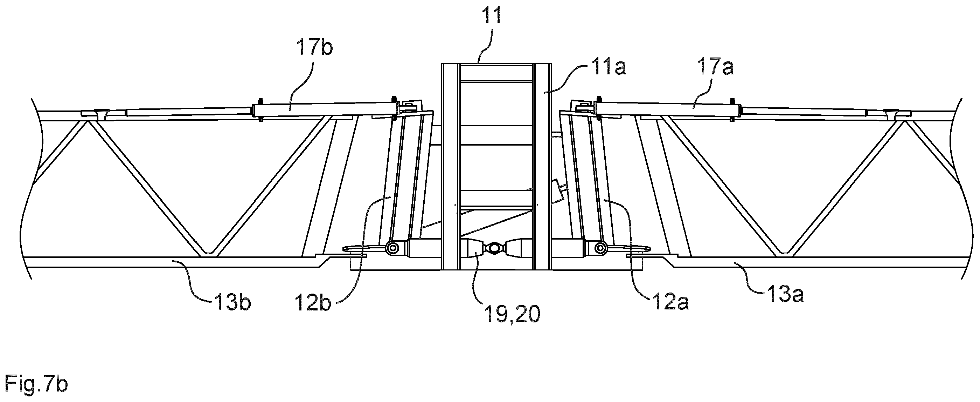

Figuren 6a und 6b zeigen schematisch einen Detailausschnitt des landwirtschaftlichen Geräts 1 in Draufsicht. Zusätzlich zu den weiter oben beschriebenen Elementen des Verteilergestänges ist eine Dämpfungsanordnung 19 zu sehen, welche in Fahrtrichtung vorne zwischen den Zwischenrahmen 12 a und 12 b angeordnet ist. Die Dämpfungsanordnung 19 kann ein oder mehrere Dämpfungselemente 20 umfassen. Die Dämpfungselemente 20 können beispielsweise einen oder mehrere, insbesondere hydraulische, Schubzylinder und/oder Gummielemente umfassen, wie in Figuren 7a und 7b näher gezeigt.

Dabei zeigt Figur 6a einen Zustand, bei dem beide Ausleger 13 a und 13 b einen Winkel von 90° zur Fahrtrichtung des landwirtschaftlichen Geräts 1 aufweisen. Demgegenüber zeigt Figur 6b einen Zustand, bei dem der Ausleger 13 a in Fahrtrichtung ausgelenkt ist, während der Ausleger 13 b entgegen der Fahrtrichtung ausgelenkt ist. Der in Figur 6b gezeigte Zustand kann beispielsweise aufgrund von durch Gierbewegungen des landwirtschaftlichen Geräts 1 ausgelösten Schwingungen des Verteilergestänges in Fahrtrichtung auftreten. Es ist zu sehen, wie die Schwingungsbewegung der Ausleger 13 a und 13 b durch die Stellvorrichtungen 17 a und 17 b und die gekrümmten Anlenkplatten 18 a,b in Drehbewegungen der Zwischenrahmen 12 a und 12 b umgesetzt wird. Es ist weiterhin zu erkennen, dass sich die Dämpfungsanordnung 19 in Figur 6b gegenüber dem in Figur 6a gezeigten Zustand horizontal verschoben hat. In dem gezeigten Fall sind die Zwischenrahmen 12 a und 12 b über die Dämpfungsanordnung 19 in horizontaler Richtung gekoppelt. Eine Bewegung in horizontaler Richtung wird gedämpft von einem Ausleger auf den anderen übertragen. Damit kann die Übertragung von Kräften, die aus solchen Schwingungen resultierenden, auf den starren Mittelteil 11 und das landwirtschaftliche Gerät 1 reduziert werden.

Figuren 7a und 7b zeigen schematisch einen Detailausschnitt des landwirtschaftlichen Geräts 1 in Frontalansicht, also entgegen der Fahrtrichtung des landwirtschaftlichen Geräts gesehen.

In Figur 7a ist eine erste Ausführungsform der Dämpfungsanordnung 19 gezeigt, welche einen hydraulischen Zylinder 20 als Dämpfungselement umfasst. Bei einer Bewegung eines der Ausleger 13 a,b in bzw. entgegen der Fahrtrichtung des landwirtschaftlichen Geräts kann sich der Kolben des Zylinders 19 horizontal verschieben, und so die Bewegung auf den anderen Ausleger übertragen. Durch die Hydraulikflüssigkeit dämpft der Zylinder 20 gleichzeitig passiv diese Bewegung. Es ist auch möglich, dass ein Druck, der an den Kammern des Zylinder 20 anliegt, aktiv gesteuert wird, um eine aktive Dämpfung zu erreichen. Insbesondere ist es möglich, dass mittels Sensoren (nicht gezeigt) eine Schwingbewegung der Ausleger 13 a,b ermittelt werden kann. Diese Sensoren können beispielsweise Beschleunigungssensoren sein, die an den Auslegern 13 a,b angeordnet sind. Es ist aber auch möglich, Druckänderungen an den Kammern des Zylinder 20 und/oder Stellvorrichtungen 17 a und 17 b zu messen, um derartige Schwingungen zu ermitteln. Dann ist es möglich, den Druck in den Kammern des Zylinder 20 derart zu regulieren, dass die Schwingbewegung gedämpft wird.

Es ist weiterhin möglich, dass der hydraulische Zylinder 20 mehrere Hydraulikkammern aufweist, wobei der hydraulische Druck in den jeweiligen Kammern individuell kontrolliert werden kann. Es ist weiterhin möglich, dass in den Hydraulikkammern zusätzliche mechanische Federelement angeordnet sind. Dadurch kann eine zusätzliche passive Dämpfungswirkung erreicht werden. Figur 7b zeigt eine alternative Ausführungsform der Dämpfungsanordnung 19. Hier ist die Dämpfungsanordnung 19 in Form von zwei Gummipufferelementen zwischen dem Mittelteil und den Zwischenrahmen 12 a und 12 b ausgebildet. Dies stellt eine einfache und kostengünstige Variante einer Dämpfungsanordnung 19 dar.

Alternativ ist es möglich, dass die Dämpfungsanordnung 19 zwei Hydraulikzylinder umfasst, die zwischen dem Mittelteil und den Zwischenrahmen 12 a und 12 b angeordnet sind. Damit kann, wie weiter oben beschrieben, eine aktive Dämpfung von Schwingungsbewegungen erreicht werden.

## Patentansprüche

1. Landwirtschaftliches Gerät (1) zum Ausbringen von Material, wie Düngemittel, Pflanzenschutzmittel oder Saatgut, umfassend
ein beidseitig klappbares Verteilergestänge (10), umfassend
einen Mittelteil (11), wobei der Mittelteil (11) drehfest mit dem landwirtschaftlichen Gerät (2) verbunden ist;
zwei Zwischenrahmen (12 a,b), die mit dem Mittelteil (11) verbunden sind;
zwei mit den jeweiligen Zwischenrahmen (12 a,b) verbundene seitliche Ausleger (13 a,b);
eine erste hydraulische Stellvorrichtung (14), die einen ersten der Zwischenrahmen (12 a) mit dem Mittelteil (11) verbindet, wobei mittels der ersten hydraulischen Stellvorrichtung (14) der entsprechende erste Ausleger (13 a) um eine erste in Fahrtrichtung des landwirtschaftlichen Geräts (1) weisende Drehachse (h1) bewegt werden kann; und
eine zweite hydraulische Stellvorrichtung (15), die die Zwischenrahmen (12 a,b) miteinander verbindet, wobei mittels der zweiten hydraulischen Stellvorrichtung (15) der entsprechende zweite Ausleger (13 b) um eine zweite in Fahrtrichtung des landwirtschaftlichen Geräts (1) weisende Drehachse (h2) bewegt werden kann.

2. Landwirtschaftliches Gerät gemäß Anspruch 1,
wobei der Mittelteil (11) einen Querrahmen (16) aufweist,
wobei der erste Zwischenrahmen (12 a) und der zweite Zwischenrahmen (12 b) nach oben gerichtet auf dem Querrahmen (16) angeordnet sind,
wobei die erste in Fahrtrichtung des landwirtschaftlichen Geräts (1) weisende Drehachse (h1) im unteren Bereich des ersten Zwischenrahmens (12 a) angeordnet ist, und
wobei die zweite in Fahrtrichtung des landwirtschaftlichen Geräts (1) weisende Drehachse (h2) im unteren Bereich des zweiten Zwischenrahmens (12 b) angeordnet ist.

3. Landwirtschaftliches Gerät gemäß einem der vorangegangenen Ansprüche, wobei die erste hydraulische Stellvorrichtung (14)
mit dem ersten Zwischenrahmen (12 a) im oberen Bereich des ersten Zwischenrahmens (12 a) verbunden ist, und
mit dem Mittelteil (11) im unteren Bereich des Mittelrahmens (11), insbesondere mit dem Querrahmen (16) und beanstandet von dem ersten Zwischenrahmen (12 a), verbunden ist.

4. Landwirtschaftliches Gerät gemäß einem der vorangegangenen Ansprüche, wobei die Zwischenrahmen (12 a,b) mit dem Mittelteil (11) jeweils mittels eines Kugelgelenks verbunden sind.

5. Landwirtschaftliches Gerät gemäß einem der vorangegangen Ansprüche, weiterhin umfassend
eine dritte hydraulische Stellvorrichtung (17 a), wobei die dritte hydraulische Stellvorrichtung (17 a) einen ersten der Zwischenrahmen (12 a) mit dem entsprechenden ersten Ausleger (13 a) verbindet,
wobei mittels der dritten hydraulischen Stellvorrichtung (17 a) der erste Ausleger (13 a) um eine erste vertikale Drehachse bewegt werden kann; und
eine vierte hydraulische Stellvorrichtung (17 b), wobei die vierte hydraulische Stellvorrichtung (17 b) den entsprechenden zweiten Zwischenrahmen (12 b) mit dem entsprechenden zweiten Ausleger (13 b) verbindet,
wobei mittels der vierten hydraulischen Stellvorrichtung (17 b) der zweite Ausleger (13 a) um eine zweite vertikale Drehachse bewegt werden kann.

6. Landwirtschaftliches Gerät gemäß einem der vorangegangen Ansprüche, weiterhin umfassend eine Dämpfungsanordnung (19) zur Dämpfung von Bewegungen des ersten Auslegers (13 a) und des zweiten Auslegers (13 b) in Fahrtrichtung des landwirtschaftlichen Geräts (1).

7. Landwirtschaftliches Gerät gemäß Anspruch 6, wobei die Dämpfungsanordnung (19) die Zwischenrahmen (12 a,b) unabhängig von dem Mittelteil (11) miteinander verbindet.

8. Landwirtschaftliches Gerät gemäß einem der Ansprüche 6 oder 7, wobei die Dämpfungsanordnung (19) mindestens ein mechanisches und/oder hydraulisches Dämpfungselement (20), insbesondere einen Hydraulikzylinder, umfasst.

9. Landwirtschaftliches Gerät gemäß Anspruch 8, insofern von Anspruch 6 abhängig, wobei die Dämpfungsanordnung (19) mindestens zwei Dämpfungselemente (20) umfasst, wobei jeweils ein Dämpfungselement (20) einen Zwischenrahmen (12 a,b) mit dem Mittelteil (11) verbindet.

10. Landwirtschaftliches Gerät gemäß einem der Ansprüche 6 - 9, wobei die Dämpfungsanordnung (19) weiterhin ein mechanisches Federelement umfasst.

11. Landwirtschaftliches Gerät gemäß einem der vorangegangen Ansprüche, weiterhin umfassend Sensoren, die dazu konfiguriert sind, Schwingungen der jeweiligen Ausleger um eine vertikale und/oder eine horizontale Achse zu erfassen.

12. Landwirtschaftliches Gerät gemäß einem der vorangegangenen Ansprüche, wobei die Zwischenrahmen (12 a,b) über Gelenke mit dem Mittelteil (11) verbunden sind.

13. Landwirtschaftliches Gerät gemäß einem der vorangegangenen Ansprüche, wobei die zweite hydraulische Stellvorrichtung (15) die Zwischenrahmen (12 a,b) im oberen Bereich der Zwischenrahmen (12 a,b) miteinander verbindet.

14. Verfahren zur Steuerung eines landwirtschaftlichen Geräts gemäß einem der vorangegangenen Ansprüche, umfassend
Ansteuern der ersten hydraulischen Stellvorrichtung (14), um den entsprechenden ersten Ausleger (13 a) um die erste in Fahrtrichtung des landwirtschaftlichen Geräts (1) weisende Drehachse (h1) zu bewegen; und
Ansteuern der zweiten hydraulischen Stellvorrichtung (15), um den entsprechenden zweiten Ausleger (13 b) um die zweite in Fahrtrichtung des landwirtschaftlichen Geräts (1) weisende Drehachse (h2) zu bewegen.

## Claims

1. Agricultural machine (1) for spreading material such as fertilizer, plant protectant or seed, which agricultural machine comprises
a distributor boom (10) which is foldable on both sides, comprising
a central part (11), wherein the central part (11) is connected to the agricultural machine (2) in a rotationally fixed manner;
two subframes (12 a,b) which are connected to the central part (11);
two lateral arms (13 a,b) which are connected to the respective subframes (12 a,b);
a first hydraulic actuating device (14) which connects a first of the subframes (12 a) to the central part (11), wherein the corresponding first arm (13 a) can be moved about a first axis of rotation (h1) pointing in the direction of travel of the agricultural machine (1) by means of the first hydraulic actuating device (14); and
a second hydraulic actuating device (15) which connects the subframes (12 a,b) to one another, wherein the corresponding second arm (13 b) can be moved about a second axis of rotation (h2) pointing in the direction of travel of the agricultural machine (1) by means of the second hydraulic actuating device (15).

2. Agricultural machine according to claim 1,
wherein the central part (11) has a transverse frame (16),
wherein the first subframe (12 a) and the second subframe (12 b) are arranged orientated upward on the transverse frame (16),
wherein the first axis of rotation (h1) pointing in the direction of travel of the agricultural machine (1) is arranged in a lower region of the first subframe (12 a), and
wherein the second axis of rotation (h2) pointing in the direction of travel of the agricultural machine (1) is arranged in a lower region of the second subframe (12 b).

3. Agricultural machine according to any of the preceding claims, wherein the first hydraulic actuating device (14)
is connected to the first subframe (12 a) in an upper region of the first subframe (12 a), and
is connected to the central part (11) in a lower region of the central frame (11), in particular
is connected to the transverse frame (16) and spaced from the first subframe (12a).

4. Agricultural machine according to any of the preceding claims, wherein the subframes (12 a,b) are each connected to the central part (11) by means of a ball joint.

5. Agricultural machine according to any of the preceding claims, further comprising
a third hydraulic actuating device (17 a), wherein the third hydraulic actuating device (17 a) connects a first of the subframes (12 a) to the corresponding first arm (13 a),
wherein the first arm (13 a) can be moved about a first vertical axis of rotation by means of the third hydraulic actuating device (17 a); and
a fourth hydraulic actuating device (17 b), wherein the fourth hydraulic actuating device (17 b) connects the corresponding second subframe (12 b) to the corresponding second arm (13 b),
wherein the second arm (13 a) can be moved about a second vertical axis of rotation by means of the fourth hydraulic actuating device (17 b).

6. Agricultural machine according to any of the preceding claims, further comprising an absorption arrangement (19) for absorbing movements of the first arm (13 a) and of the second arm (13 b) in the direction of travel of the agricultural machine (1).

7. Agricultural machine according to claim 6, wherein the absorption arrangement (19) connects the subframes (12 a,b) to one another independently of the central part (11).

8. Agricultural machine according to either of claims 6 or 7, wherein the absorption arrangement (19) comprises at least a mechanical and/or hydraulic absorption element (20), in particular a hydraulic cylinder.

9. Agricultural machine according to claim 8, when dependent on claim 6, wherein the absorption arrangement (19) comprises at least two absorption elements (20), wherein each absorption element (20) connects a subframe (12 a,b) to the central part (11).

10. Agricultural machine according to any of claims 6-9, wherein the absorption arrangement (19) further comprises a mechanical spring element.

11. Agricultural machine according to any of the preceding claims, further comprising sensors which are designed to detect vibrations of the respective arms about a vertical and/or a horizontal axis.

12. Agricultural machine according to any of the preceding claims, wherein the subframes (12 a,b) are connected to the central part (11) via joints.

13. Agricultural machine according to any of the preceding claims, wherein the second hydraulic actuating device (15) connects the subframes (12 a,b) to one another in the upper region of the subframes (12 a,b).

14. Method for controlling an agricultural machine according to any of the preceding claims, comprising
controlling the first hydraulic actuating device (14) in order to move the corresponding first arm (13 a) about the first axis of rotation (h1) pointing in the direction of travel of the agricultural machine (1); and
controlling the second hydraulic actuating device (15) in order to move the corresponding second arm (13 b) about the second axis of rotation (h2) pointing in the direction of travel of the agricultural machine (1).

## Revendications

1. Appareil agricole (1) pour l'épandage de matériau, tel que de l'engrais, des agents phytosanitaires ou des semences, comprenant
une rampe de distribution (10) pouvant se rabattre des deux côtés, comprenant
une partie centrale (11), dans lequel la partie centrale (11) est reliée à l'appareil agricole (2) de manière solidaire en rotation ;
deux cadres intermédiaires (12 a, b) reliés à la partie centrale (11) ;
deux bras latéraux (13 a, b) reliés aux cadres intermédiaires (12 a, b) respectifs ;
un premier dispositif de réglage hydraulique (14) qui relie un premier des cadres intermédiaires (12 a) à la partie centrale (11), dans lequel, au moyen du premier dispositif de réglage hydraulique (14), le premier bras (13 a) correspondant peut être déplacé autour d'un premier axe de rotation (h1) orienté dans le sens de déplacement de l'appareil agricole (1) ; et
un deuxième dispositif de réglage hydraulique (15) qui relie les cadres intermédiaires (12 a, b) entre eux, dans lequel, au moyen du deuxième dispositif de réglage hydraulique (15), le second bras (13 b) correspondant peut être déplacé autour d'un second axe de rotation (h2) orienté dans le sens de déplacement de l'appareil agricole (1).

2. Appareil agricole selon la revendication 1,
dans lequel la partie centrale (11) présente un cadre transversal (16),
dans lequel le premier cadre intermédiaire (12 a) et le second cadre intermédiaire (12 b) sont disposés sur le cadre transversal (16) en étant orientés vers le haut,
dans lequel le premier axe de rotation (h1) orienté dans le sens de déplacement de l'appareil agricole (1) est disposé dans la zone inférieure du premier cadre intermédiaire (12a), et
dans lequel le second axe de rotation (h2) orienté dans le sens de déplacement de l'appareil agricole (1) est disposé dans la zone inférieure du second cadre intermédiaire (12 b).

3. Appareil agricole selon l'une des revendications précédentes, dans lequel le premier dispositif de réglage hydraulique (14)
est relié au premier cadre intermédiaire (12 a) dans la zone supérieure du premier cadre intermédiaire (12 a), et
est relié à la partie centrale (11) dans la zone inférieure du cadre central (11), en particulier
est relié au cadre transversal (16) et est à distance du premier cadre intermédiaire (12 a).

4. Appareil agricole selon l'une des revendications précédentes, dans lequel les cadres intermédiaires (12 a, b) sont reliés à la partie centrale (11) respectivement au moyen d'une articulation à bille.

5. Appareil agricole selon l'une des revendications précédentes, comprenant en outre
un troisième dispositif de réglage hydraulique (17 a), dans lequel le troisième dispositif de réglage hydraulique (17 a) relie un premier des cadres intermédiaires (12 a) au premier bras (13 a) correspondant,
dans lequel, au moyen du troisième dispositif de réglage hydraulique (17 a), le premier bras (13 a) peut être déplacé autour d'un premier axe de rotation vertical ; et
un quatrième dispositif de réglage hydraulique (17 b), dans lequel le quatrième dispositif de réglage hydraulique (17 b) relie le second cadre intermédiaire (12 b) correspondant au second bras (13 b) correspondant,
dans lequel, au moyen du quatrième dispositif de réglage hydraulique (17 b), le second bras (13 a) peut être déplacé autour d'un second axe de rotation vertical.

6. Appareil agricole selon l'une des revendications précédentes, comprenant en outre un agencement d'amortissement (19) destiné à amortir les mouvements du premier bras (13 a) et du second bras (13 b) dans le sens de déplacement de l'appareil agricole (1).

7. Appareil agricole selon la revendication 6, dans lequel l'agencement d'amortissement (19) relie les cadres intermédiaires (12 a, b) entre eux indépendamment de la partie centrale (11).

8. Appareil agricole selon l'une des revendications 6 ou 7, dans lequel l'agencement d'amortissement (19) comprend au moins un élément d'amortissement (20) mécanique et/ou hydraulique, en particulier un vérin hydraulique.

9. Appareil agricole selon la revendication 8, lorsqu'elle dépend de la revendication 6, dans lequel l'agencement d'amortissement (19) comprend au moins deux éléments d'amortissement (20), dans lequel respectivement un élément d'amortissement (20) relie un cadre intermédiaire (12 a, b) à la partie centrale (11).

10. Appareil agricole selon l'une des revendications 6 à 9, dans lequel l'agencement d'amortissement (19) comprend en outre un élément formant ressort mécanique.

11. Appareil agricole selon l'une des revendications précédentes, comprenant en outre des capteurs configurés pour détecter les vibrations des bras respectifs autour d'un axe vertical et/ou d'un axe horizontal.

12. Appareil agricole selon l'une des revendications précédentes, dans lequel les cadres intermédiaires (12 a, b) sont reliés à la partie centrale (11) par l'intermédiaire d'articulations.

13. Appareil agricole selon l'une des revendications précédentes, dans lequel le deuxième dispositif de réglage hydraulique (15) relie les cadres intermédiaires (12 a, b) entre eux dans la zone supérieure des cadres intermédiaires (12 a, b).

14. Procédé permettant la commande d'un appareil agricole selon l'une des revendications précédentes, comprenant
la commande du premier dispositif de réglage hydraulique (14) pour déplacer le premier bras (13 a) correspondant autour du premier axe de rotation (h1) orienté dans le sens de déplacement de l'appareil agricole (1) ; et
la commande du deuxième dispositif de réglage hydraulique (15) pour déplacer le second bras (13 b) correspondant autour du second axe de rotation (h2) orienté dans le sens de déplacement de l'appareil agricole (1).
